# EUROPÄISCHE PATENTSCHRIFT

(11) **EP 3 286 068 B1**
(45) Veröffentlichungstag und Bekanntmachung des Hinweises auf die Patenterteilung: **29.01.2020**
(21) Anmeldenummer: 16707737.9
(22) Anmeldetag: 02.03.2016
(51) Int. Cl.: B60G 3/20, B62D 21/11

(54) **ACHSTRÄGER FÜR EIN FAHRZEUG**
AXLE SUPPORT FOR A VEHICLE
PORTE-ESSIEU POUR UN VÉHICULE

(30) Priorität: 23.04.2015 DE 102015207402
(43) Veröffentlichungstag der Anmeldung: 28.02.2018
(73) Patentinhaber: Bayerische Motoren Werke Aktiengesellschaft, 80809 München (DE)
(72) Erfinder: STÖRK, Kai-Uwe, 82234 Wessling (DE)
(86) Internationale Anmeldenummer: PCT/EP2016/054400
(87) Internationale Veröffentlichungsnummer: WO 2016/169686

(56) Entgegenhaltungen:
- EP-A1- 0 987 166
- EP-A1- 1 686 042
- EP-A1- 1 966 029
- DE-A1- 10 058 113
- DE-A1-102011 052 216
- DE-A1-102013 013 325
- DE-T2- 60 305 517
- US-A1- 2003 107 200
- US-A1- 2005 116 434
- US-A1- 2011 062 677

## Beschreibung

Vorliegende Erfindung betrifft einen Achsträger für ein Fahrzeug, insbesondere für ein Fahrzeug mit elektrischem Antrieb. Zum Stand der Technik wird beispielshalber auf die EP1253028 und insbesondere auf die DE102012005561 sowie die US 2011/062 677 A1 verwiesen.

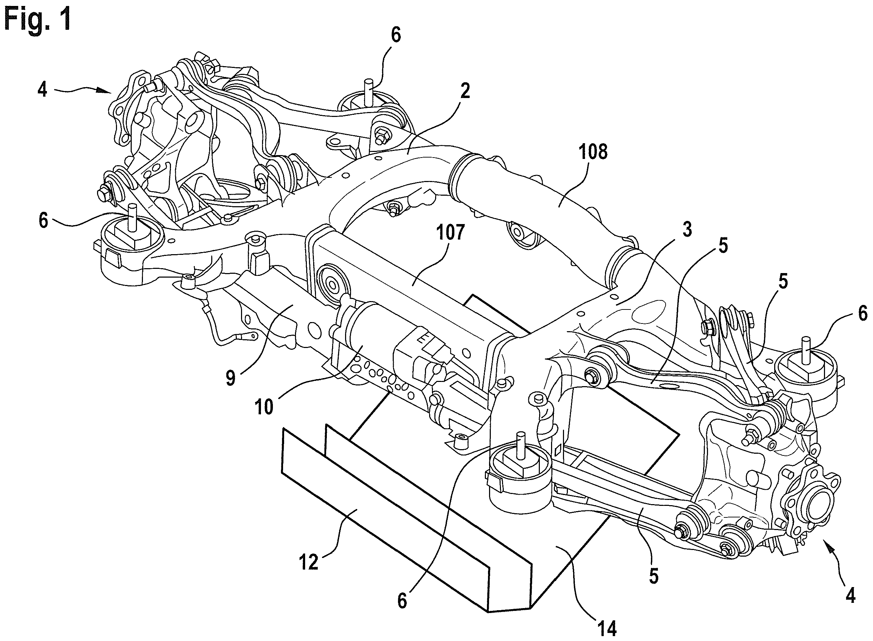

Beiliegende Figur 1 zeigt (mit Ausnahme der Teile mit den Bezugszeichen 12 und 14) einen herkömmlichen Achsträger. Dieser Achsträger umfasst zwei Längsträger 2, 3, an denen jeweils eine Radaufhängung 4 befestigt ist. Die beiden Längsträger 2, 3 sind über Querträger 107, 108 miteinander verbunden. Parallel zu den Querträgern 107, 108 erstreckt sich eine Halterung 9, auf der ein Bestandteil 10 eines Achsregelsystems (hier ein Aktor einer Hinterachslenkung) befestigt ist.

Des Weiteren ist es bekannt, dass Fahrzeug-Achsträger unter anderem zur Einsparung von Material und damit von Fahrzeuggewicht oder aus Gründen einer optimierten Steifigkeit und Festigkeit hohl oder schlaenförmig aufgebaut sind.

So beschreibt die oben genannte DE102012005561A1 einen Hilfsrahmen in einem Fahrzeug, welcher jeweils zwei Quer- und Längsträger umfasst. Dabei werden zwei durch jeweils zwei Schalenelemente aufgebaute Querträger aufgezeigt, welche durch Verbindung der beiden Schalenelemente jeweils einen hohlen Aufbau aufweisen. Durch einen deratigen hohlen bzw. schalenförmigen Aufbau der Querträger sollen unter anderem Verbesserungen in den Steifigkeitssowie Festigkeitseigenschaften des Hilfsrahmens erzielt werden.

Desweiteren beschreibt die EP1253028 einen Fahrzeugachsträger bzw. einen Lenker einer Kraftfahrzeugaufhängung, welcher zumindest abschnittsweise in seinem Querschnitt einen freien Innenraum, also einen Hohlraum aufweist. Dieser Hohlraum wird dazu genutzt, Hydraulikleitungen geschützt unterzubringen. Dabei kann vermieden werden, dass die Leitungen durch Umwelteiwirkungen wie zum Beispiel durch einen Steinschlag beschädigt werden.

Neben dem dem Schutz von Fahrzeugbauteilen und einer optimalen Auslegung von Fahrzeugteilen hinsichtlich Steifigkeits- und Festigkeitsanforderungen spielt eine optimale Bauraumauslegung eine immer größer werdene Rolle. Mit steigender Anzahl der Fahrzeugbestandteile durch hinzukommende Elektronik oder Weiteres steigt ebenso die Komplexität der Fahrzeugkomponenten und deren Unterbringung im Fahrzeug selbst. So lassen beispielsweise die herkömmlichen im Stand der Technik aufgezeigten Achsträger relativ wenig Bauraum für die Integration von hinzukommenden Fahrzeugbestandteilen, wie beispielsweise eines elektrischen Antriebs in den Achsträger frei.

Es ist Aufgabe vorliegender Erfindung einen Achsträger anzugeben, welcher durch eine hohl ausgebildete Struktur sowohl eine Verbesserung hinsichtlich Steifigekeits- und Festigkeitsanforderungen, als auch eine optimale Bauraumausnutzung im Fahrzeug gewährleistet.

Die Lösung der Aufgabe erfolgt durch die Merkmale des Anspruchs 1. Die Unteransprüche haben vorteilhafte Ausgestaltungen der Erfindung zum Gegenstand.

Somit wird die Aufgabe gelöst durch einen Achsträger für ein Fahrzeug. Das Fahrzeug ist insbesondere ein zweispuriges Kraftfahrzeug. Besonders bevorzugt wird der Achsträger in Verbindung mit einem elektrisch angetriebenen Fahrzeug verwendet. Der Achsträger weist einen linken Längsträger zur Befestigung einer linken Radaufhängung und einen rechten Längsträger zur Befestigung einer rechten Radaufhängung auf. Des Weiteren ist zumindest ein die beiden Längsträger verbindender Querträger zur Übertragung von Fahrwerkslasten vorgesehen. Im Rahmen der Erfindung ist vorgesehen, dass der Querträger durch zwei aufeinandergesetzte Schalen gebildet ist. Diese beiden Schalen sind zerstörungsfrei lösbar miteinander verbunden. Zwischen den beiden Schalen des Querträgers verbleibt ein Hohlraum, der für Bestandteile einer Achslenkung, genutzt wird. Dadurch ergibt sich insgesamt eine bauraumoptimierte Gestaltung des Achsträgers. Aufgrund der zerstörungsfrei lösbaren Verbindung zwischen den beiden Schalen ist sowohl eine einfache erste Montage als auch eine spätere Wartung der Bestandteile einer Achslenkung, welche sich in dem Hohlraum befinden, möglich.

Unter "zerstörungsfrei lösbar" wird hier insbesondere jede Verbindung verstanden, die nicht stoffschlüssig ist. So werden die beiden Schalen insbesondere nicht durch Schweißen, Löten oder Verkleben miteinander verbunden. Eine Nietverbindung ist hier möglich, da diese lediglich durch Zerstören der Niet lösbar ist, wobei dabei die beiden Schalen völlig unzerstört bleiben. Insbesondere wird man hier eine Schraubverbindung zwischen den beiden Schalen wählen. Eine der beiden Schalen kann auch flach ausgebildet werden und somit die Form eines Deckels aufweisen. Entscheidend ist lediglich, dass aufgrund des erfindungsgemäßen Aufbaues des Querträgers ein Hohlraum verbleibt, der genutzt werden kann.

Erfindungsgemäß umfasst der Achsträger zumindest einen Bestandteil einer Achslenkung. Eben dieser Bestandteil ist erfindungsgemäß im Hohlraum zwischen den beiden Schalen eingebaut. Besonders bevorzugt handelt es sich bei der Achslenkung um eine Hinterachslenkung. Der im Hohlraum integrierte Bestandteil ist dabei besonders bevorzugt ein elektrischer, pneumatischer oder hydraulischer Aktor der Achslenkung, welche wie üblich als Achsschenkellenkung ausgeführt ist. Vorteilhafterweise ist dieser Aktor über ein entsprechendes Gestänge mit der Radaufhängung, genauer mit deren Radträger verbunden.

Zusätzlich zu Bestandteilen einer Achslenkung kann in dem Hohlraum auch beispielsweise eine Leistungselektronik untergebracht werden.

Vorteilhafterweise umfasst der Achsträger eine Halterung, die beidseitig mit den Längsträgern verbunden ist. Die Halterung erstreckt sich durch den Hohlraum zwischen den beiden Schalen des Querträgers. Der Bestandteil der Achslenkung ist vorteilhafterweise an dieser Halterung befestigt. Es erfolgt also keine direkte Befestigung des Bestandteils der Achlenkung an den Schalen, so dass hier die Montage und Demontage erleichtert wird.

Bevorzugt ist vorgesehen, dass eine der beiden Schalen direkt mit den beiden Längsträgern fest verbunden ist. Alternativ können auch beide Schalen mit ihren jeweiligen Enden direkt mit den beiden Längsträgern verbunden werden. Dadurch ergibt sich eine sehr steife Struktur.

Der Querträger weist eine Gesamtlänge auf. Diese entspricht im Wesentlichen dem Abstand der beiden Längsträger. Jede der beiden Schalen erstreckt sich bevorzugt über zumindest 80%, vorzugsweise 100%, der Gesamtlänge. Dabei muss zumindest eine der beiden Schalen sich über 100% der Gesamtlänge erstrecken.

Des Weiteren ist bevorzugt vorgesehen, dass an einer der beiden Schalen, vorzugsweise an der unteren Schale, keine radführenden Bauteile, beispielsweise Lenker, befestigt sind. Dadurch wird erreicht, dass die Toleranzauswirkungen bezüglich der achsträgerseitigen Anbindungspunkte dieser radführenden Bauteile auf ein im Stand der Technik bekanntes Maß reduziert wird. Des Weiteren ergeben sich dadurch entscheidende Vorteile bei der Montage und Demontage. Noch bevor die zweite Schale angebracht wird, können sämtliche radführenden Bauteile an der Konstruktion aus den beiden Längsträgern und der zumindest einen Schale des zumindest einen Querträgers befestigt werden. Beim Service kann lediglich die untere Schale demontiert werden, ohne dabei radführende Bauteile demontieren zu müssen. Dadurch ist ein sehr einfacher und schneller Zugang zu der Komponente im Hohlraum möglich.

Der Achsträger umfasst einen weiteren Querträger und ein plattenförmiges Schubfeld. Das plattenförmige Schubfeld ist mit beiden Querträgern verbunden, wobei vorteilhafterweise vorgesehen ist, dass das Schubfeld mit dem weiteren Querträger zerstörungsfrei lösbar verbunden ist. An der Seite des zweischaligen Querträgers wird das Schubfeld lediglich mit einem der beiden Schalen verbunden. Diese Schale bildet somit zusammen mit dem Schubfeld eine Einheit, die, beispielsweise durch Lösen von Schrauben, demontiert werden kann.

Vorteilhafterweise umfasst der Achsträger eine elektrische Maschine zum Antrieb des Fahrzeugs. Die elektrische Maschine ist zwischen den beiden Längsträgern angeordnet. Bei Verwendung zweier Querträger ist die elektrische Maschine vorteilhafterweise zwischen den beiden Querträgern angeordnet. Durch Demontage der einen Schale mit dem Schubfeld ist von unten stets ein einfacher Zugang zu der elektrischen Maschine möglich.

Darüber hinaus ermöglicht der zweischalige Aufbau des Querträgers die Verwendung unterschiedlicher Materialien. Insbesondere ist vorgesehen, dass die untere mit dem Schubfeld verbundene Schale aus faserverstärktem Kunststoff gefertigt wird.

Weitere Einzelheiten, Merkmale und Vorteile der Erfindung ergeben sich aus der nachfolgenden Beschreibung und den Figuren. Es zeigen:
- Figur 1: einen Achsträger nach dem Stand der Technik mit schematischer Skizzierung der Erfindung,
- Figur 2: einen Querschnitt eines Achsträgers nach dem Stand der Technik, und
- Figur 3: einen Querschnitt des Achsträgers gemäß einem Ausführungsbeispiel der Erfindung.

Der erfindungsgemäße Achsträger umfasst zwei Längsträger 2, 3. An den beiden Längsträgern 2, 3 ist jeweils eine Radaufhängung 4 angeordnet. In der Radaufhängung 4 ist der jeweilige Radträger über radführende Bauteile (Lenker) mit den Längsträgern 2, 3 verbunden.

An den Längsträgern 2, 3 sind mehrere Karosserieanbindungspunkte 6 ausgebildet. Diese dienen zur Befestigung des Achsträgers 1 an einer Karosserie des entsprechenden Fahrzeuges.

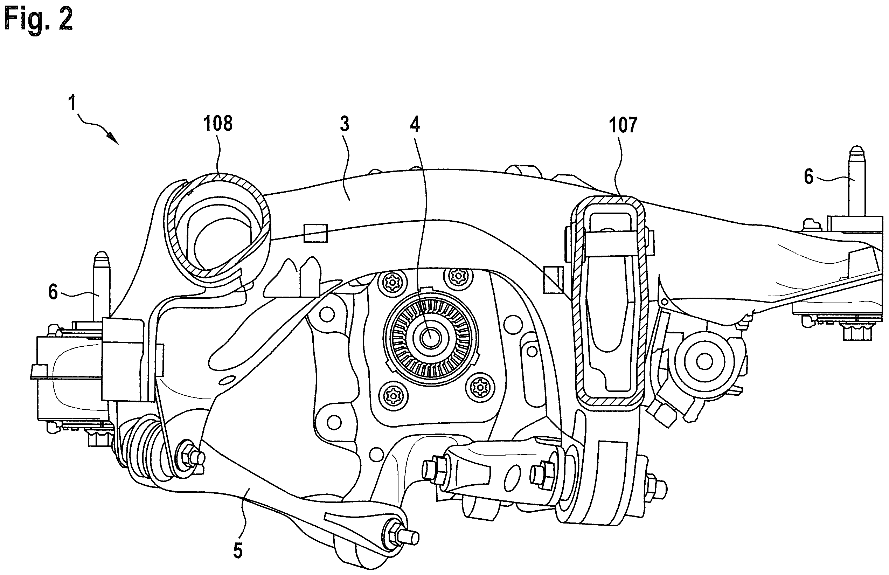

Figur 1 zeigt zwei Querträger 107, 108 nach dem Stand der Technik zur Verbindung der beiden Längsträger 2, 3. Figur 2 zeigt einen Querschnitt durch einen Achsträger nach dem Stand der Technik.

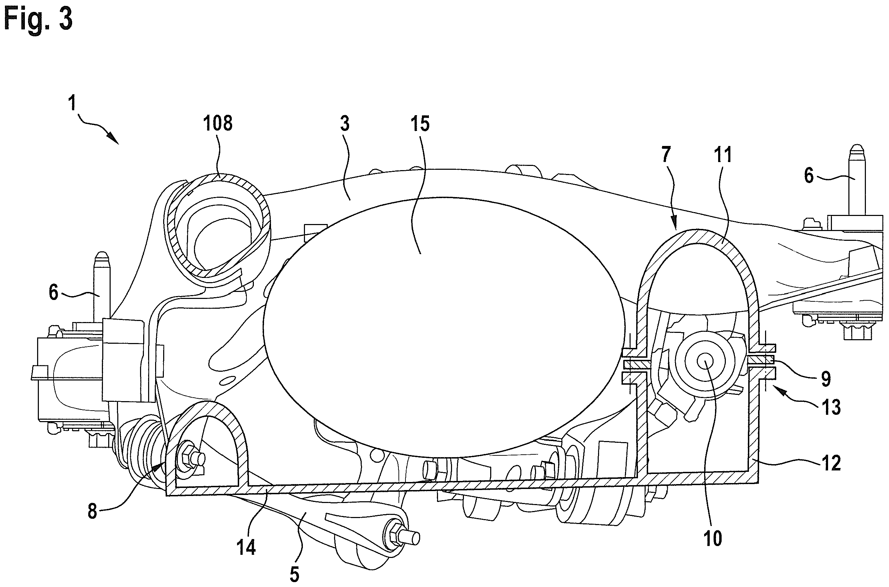

Erfindungsgemäß wird zumindest der hintere Querträger 107 durch die in Figur 3 dargestellte Konstruktion ersetzt. Dies ist mit den Bauteilen 12 und 14 in Figur 1 schematisch angedeutet.

Figur 1 und 3 zeigen des Weiteren, dass der erfindungsgemäße Achsträger 1 eine Halterung 9 umfasst, die mit ihren beiden Enden mit den Längsträgern 2, 3 verbunden ist. Auf dieser Halterung 9 sitzt ein Bestandteil 10 einer Achslenkung. Im konkreten Fall handelt es sich hierbei um einen hydraulischen Aktor einer Hinterachslenkung.

Figur 3 zeigt in Ergänzung zu Figur 1 die erfindungsgemäße Konstruktion. Gemäß dem Querschnitt in Figur 3 ist der Querträger 107 nach dem Stand der Technik ersetzt durch den erfindungsgemäßen Querträger 7. Dieser Querträger ist zweischalig aufgebaut und umfasst somit eine erste Schale 11 und eine zweite Schale 12. Im gezeigten Beispiel ist die zweite Schale 12 unter der ersten Schale 11 angeordnet.

Zwischen den beiden Schalen 11, 12 ergibt sich ein Hohlraum, welcher zur Aufnahme der Halterung 9 mit dem Bestandteil 10 genutzt wird.

Die beiden Schalen 11, 12 sind über mehrere Verschraubungen 13 zerstörungsfrei lösbar miteinander verbunden.

Insbesondere ist vorgesehen, den in Figur 3 dargestellten erfindungsgemäßen weiteren Querträger 8 zu nutzen und diesen weiteren Querträger 8 mit der zweiten Schale 12 des Querträgers 7 über ein Schubfeld 14 zu verbinden. Figur 3 zeigt ferner den Querträger 108 nach dem Stand der Technik. Dieser kann in der erfindungsgemäßen Konstruktion zusätzlich genutzt werden.

Das Schubfeld 14 ist plattenförmig und erstreckt sich im Wesentlichen in der horizontalen Ebene. Mit der zweiten Schale 12 kann das Schubfeld 14 auch stoffschlüssig verbunden sein. Entscheidend ist, dass das Schubfeld 14 vorteilhafterweise mit dem weiteren Querträger 8 zerstörungsfrei lösbar verbunden ist. Dadurch ergibt sich die Möglichkeit, im Service die zweite Schale 12 zusammen mit dem Schubfeld 14 zu demontieren. Dadurch ist sowohl der Hohlraum im Querträger 7 als auch der Zwischenraum zwischen dem Querträger 7 und dem weiteren Querträger 8 gut zugänglich.

Der Raum zwischen den beiden Querträgern 7, 8 wird vorteilhafterweise zur Integration einer elektrischen Maschine 15 genutzt. Diese elektrische Maschine 15 wiederum dient zum alleinigen oder unterstützenden Antrieb des Fahrzeuges.

### Bezugszeichenliste:

- 1: Achsträger
- 2: linker Längsträger
- 3: rechter Längsträger
- 4: Radaufhängung
- 5: radführende Bauteile (Lenker)
- 6: Karosserieanbindungspunkte
- 7: Querträger
- 8: weiterer Querträger
- 9: Halterung
- 10: Bestandteil
- 11, 12: Schalen
- 13: Verschraubung
- 14: Schubfeld
- 15: elektrische Maschine
- 107: Querträger nach dem Stand der Technik
- 108: weiterer Querträger nach dem Stand der Technik

## Patentansprüche

1. Achsträger (1) für ein Fahrzeug umfassend einen linken Längsträger (2) zur Befestigung einer linken Radaufhängung (4), einen rechten Längsträger (3) zur Befestigung einer rechten Radaufhängung (4) und zumindest einen die beiden Längsträger (2, 3) verbindenden Querträger (7), wobei der Querträger (7) durch zwei aufeinander gesetzte Schalen (11, 12) gebildet ist, und wobei die beiden Schalen (11, 12) zerstörungsfrei lösbar miteinander verbunden sind, wobei im Hohlraum zwischen den beiden Schalen (11, 12) zumindest ein Bestandteil (10) einer Achslenkung eingebaut ist und wobei die zweite Schale (12) unter der ersten Schale (11) angeordnet ist und wobei der Achsträger einen weiteren Querträger (8) umfasst,
**dadurch gekennzeichnet, dass**
der weitere Querträger (8) mit der zweiten Schale (12) des Querträgers (7) über ein plattenförmiges Schubfeld (14) verbunden ist, wodurch die zweite Schale (12) zusammen mit dem Schubfeld (14) demontierbar ist und der Hohlraum im Querträger (7) gut zugänglich ist.

2. Achsträger nach Anspruch 1, **dadurch gekennzeichnet, dass** der Bestandteil der Achslenkung ein elektrischer, pneumatischer oder hydraulischer Aktor ist.

3. Achsträger nach einem der vorhergehenden Ansprüche, **gekennzeichnet durch** eine an beiden Längsträgern (2, 3) befestigte Halterung (9) im Hohlraum, wobei der Bestandteil (10) des Achsregelsystems an der Halterung (9) befestigt ist.

4. Achsträger nach einem der vorhergehenden Ansprüche, **dadurch gekennzeichnet, dass** die beiden Schalen (11, 12) miteinander verschraubt sind.

5. Achsträger nach einem der vorhergehenden Ansprüche, **dadurch gekennzeichnet, dass** eine der beiden Schalen (11, 12) direkt mit beiden Längsträgern (2, 3) fest verbunden ist, oder dass beide Schalen (11, 12) jeweils direkt mit beiden Längsträgern (2, 3) verbunden sind.

6. Achsträger nach einem der vorhergehenden Ansprüche, **dadurch gekennzeichnet, dass** der Querträger (7) eine Gesamtlänge aufweist und jede Schalen (11, 12) sich über zumindest 80%, vorzugsweise 100%, der Gesamtlänge erstreckt.

7. Achsträger nach einem der vorhergehenden Ansprüche, **dadurch gekennzeichnet, dass** an einer Schale (12), vorzugsweise der unteren Schale (12), keine radführenden Bauteile (5) befestigt sind.

8. Achsträger nach einem der vorhergehenden Ansprüche, wobei das Schubfeld (14) mit beiden Querträgern (7, 8) verbunden ist, und wobei die Verbindung mit dem weiteren Querträger (8) zerstörungsfrei lösbar ist.

9. Achsträger nach einem der vorhergehenden Ansprüche, **gekennzeichnet durch** eine elektrische Maschine (15) zum Antrieb des Fahrzeuges, wobei die elektrische Maschine (15) zwischen den beiden Längsträgern (2, 3) angeordnet ist.

## Claims

1. An axle support (1) for a vehicle, comprising a left longitudinal support (2) for fastening a left wheel suspension (4), a right longitudinal support (3) for fastening a right wheel suspension (4), and at least one cross support (7) connecting the two longitudinal supports (2, 3), wherein the cross support is formed by two shells (11, 12) placed one on top of the other, and wherein the two shells (11, 12) are interconnected so as to be detachable in non-destructive fashion, wherein at least one constituent part (10) of an axle steering system is installed in the cavity between the two shells (11, 12), and wherein the second shell (12) is arranged below the first shell (11), and wherein the axle support comprises a further cross support (8),
**characterised in that**
the further cross support (8) is connected to the second shell (12) of the cross support (7) via a planar shear panel (14), whereby the second shell (12) can be uninstalled together with the shear panel (14) and the cavity in the cross support (7) is easily accessible.

2. An axle support according to claim 1, **characterised in that** the constituent part of the axle steering system is an electric, pneumatic or hydraulic actuator.

3. An axle support according to either one of the preceding claims, **characterised by** a holder (9), which is fastened to the two longitudinal supports (2, 3), in the cavity, wherein the constituent part (10) of the axle steering system is fastened to the holder (9).

4. An axle support according to one of the preceding claims, **characterised in that** the two shells (11, 12) are screwed to one another.

5. An axle support according to one of the preceding claims, **characterised in that** one of the two shells (11, 12) is fixedly connected directly to the two longitudinal supports (2, 3), or **in that** both shells (11, 12) are each connected directly to the two longitudinal supports (2, 3).

6. An axle support according to one of the preceding claims, **characterised in that** the cross support (7) has a total length and each shell (11, 12) extends over at least 80%, preferably 100% of the total length.

7. An axle support according to one of the preceding claims, **characterised in that** no wheel control components (5) are fastened to one of the shells (12), preferably the lower shell (12).

8. An axle support according to one of the preceding claims, wherein the shear panel (14) is connected to the two cross supports (7, 8), and wherein the connection to the further cross support (8) is detachable in non-destructive fashion.

9. An axle support according to one of the preceding claims, **characterised by** an electric machine (15) for driving the vehicle, wherein the electric machine (15) is arranged between the two longitudinal supports (2, 3).

## Revendications

1. Support d'essieu (1) d'un véhicule comprenant un longeron gauche (2) destiné à la fixation d'une suspension gauche (4), un longeron droit (3) destiné à la fixation d'une suspension droite (4) et au moins une traverse (7) reliant les deux longerons (2, 3), la traverse (7) étant formée par deux coques (11, 12) appliquées l'une sur l'autre, ces deux coques (11, 12) pouvant être reliées l'une à l'autre de façon amovible sans destruction, et dans le volume creux situé entre celles-ci étant monté au moins un composant (10) d'une direction d'essieu, la seconde coque (12) étant installée au-dessous de la première coque (11), et le support d'essieu comprenant une autre traverse (8),
**caractérisé en ce que**
l'autre traverse (8) est reliée à la seconde coque (12) de la traverse (7) par l'intermédiaire d'un champ de poussée (14) en forme de plaque, de sorte que la seconde coque (12) puisse être démontée avec le champ de poussée (14) et que le volume creux soit facilement accessible dans la traverse (7).

2. Support d'essieu conforme à la revendication 1,
**caractérisé en ce que**
le composant de la direction d'essieu est un actionneur électrique pneumatique ou hydraulique.

3. Support d'essieu conforme à l'une des revendications précédentes,
**caractérisé par**
une fixation (9) fixée sur les deux longerons (2, 3) dans le volume creux, le composant (10) du système de réglage d'essieu étant fixé sur la fixation (9).

4. Support d'essieu conforme à l'une des revendications précédentes,
**caractérisé en ce que**
les deux coques (11, 12) sont vissées l'une sur l'autre.

5. Support d'essieu conforme à l'une des revendications précédentes,
**caractérisé en ce qu'**
une des deux coques (11, 12) est directement reliée solidairement aux deux longerons (2, 3), ou les deux coques (11, 12) sont respectivement reliées directement aux deux longerons (2, 3).

6. Support d'essieu conforme à l'une des revendications précédentes,
**caractérisé en ce que**
la traverse (7) a une longueur globale et chaque coque (11, 12) s'étend sur au moins 80%, et de préférence sur 100% de cette longueur globale.

7. Support d'essieu conforme à l'une des revendications précédentes,
**caractérisé en ce qu'**
aucun composant (5) de guidage de roue n'est fixé sur une coque (12), de préférence sur la coque inférieure (12).

8. Support d'essieu conforme à l'une des revendications précédentes, dans lequel le champ de poussée (14) est relié aux deux traverses (7, 8) et la liaison avec l'autre traverse (8) est amovible sans destruction.

9. Support d'essieu conforme à l'une des revendications précédentes,
**caractérisé par**
une machine électrique (15) permettant d'entraîner le véhicule, cette machine électrique (15) étant installée entre les deux longerons (2, 3).
